# EUROPEAN PATENT APPLICATION

(11) **EP 1 942 225 A1**
(43) Date of publication of application: **09.07.2008**
(21) Application number: 06810300.1
(22) Date of filing: 20.09.2006
(51) Int. Cl.: D21H 19/20, C07C 323/12, C08F 20/24, C08F 20/38, C08F 20/54, C09D 133/14, C09K 3/14

(54) **TREATMENT FOR PAPER AND METHOD FOR TREATMENT OF PAPER**

(30) Priority: 21.09.2005 US 718739 P
(71) Applicant: DAIKIN INDUSTRIES, LTD., Osaka-shi, Osaka 530-8323 (JP)
(72) Inventor: USUGAYA, Mitsuhiro, Settsu-shi, Osaka 566-8585 (JP); MATSUDA, Michio, Settsu-shi, Osaka 566-8585 (JP)
(74) Representative: HOFFMANN EITLE
(86) International application number: PCT/JP2006/318604
(87) International publication number: WO 2007/034818

(57) **Abstract**

A treatment for paper, containing (A) a fluorine-containing polymer comprising repeating units derived from a fluorine-containing monomer (a) represented by the general formula (I):

CH₂=C(-X)-C(=O)-Y-(CH₂)ₘ-Z-(CH₂)ₙ-Rf (I)

wherein X is hydrogen, methyl, fluoro, chloro, CFX¹X² (wherein X¹ and X² are each hydrogen, fluoro, or chloro), or the like; Y is -O- or -NH-; Z is -S-, -SO-, or -SO₂-; Rf is fluoroalkyl having 1 to 6 carbon atoms; m is 1 to 10; and n is 0 to 10.

## Description

### TECHNICAL FIELD

The present invention relates to a polymer and a treatment which impart excellent water repellency, oil repellency and soil resistance to paper.

### BACKGROUND ART

Hitherto, various fluorine-containing compounds are proposed. The fluorine-containing compounds have the advantageous effects of having properties excellent in heat resistance, oxidation resistance, weather resistance and the like. The fluorine-containing compounds are used as, for example, the water- and oil-repellent agent and soil release agent by utilizing the properties that the fluorine-containing compounds have low free energy, i.e., difficulty in adherence.

Examples of the fluorine-containing compounds used as the water- and oil-repellent agent include a fluorine-containing polymer having repeating units derived from (meth)acrylate ester having a fluoroalkyl group. It is proposed that a (meth)acrylate ester having a spacer which is an organic group positioned between an acrylate group and a fluoroalkyl group is used in the fluorine-containing polymer. Such fluorine-containing polymers having the spacer are disclosed in, for example, US Patent No. 3655732, US Patent No. 3773826, US Patent No. 3916053 and US Patent No. 5439998. These fluorine-containing polymers, however, could not impart sufficient water- and oil-repellency to paper.

An environmental problem of PFOA is explained hereinafter. Recent study results (EPA Report "PRELIMINARY RISK ASSESSMENT OF THE DEVELOPMENTAL TOXICITY ASSOCIATED WITH EXPOSURE TO PERFLUOROOCTANOIC ACID AND ITS SALTS" (http://www.epa.gov/opptintr/pfoa/pfoara.pdf)) and the like clarify that a PFOA (perfluorooctanoic acid) doubtfully has a potential risk of environmental load. EPA (Environmental Protection Agency of USA) announced on April 14, 2003 that the EPA intensifies the scientific investigation on PFOA.

On the other hand, Federal Register (FR Vol. 68, No. 73/April 16, 2003 [FRL-2303-8]) (http://www.epa.gov/opptintr/pfoa/pfoafr.pdf),
EPA Environmental News for release Monday April, 2003 "EPA INTENSIFIES SCIENTIFIC INVESTIGATION OF A CHEMICAL PROCESSING AID" (http://www.epa.gov/opptintr/pfoa/pfoaprs.pdf), and
EPA OPPT FACT SHEET April 14, 2003 (http://www.epa.gov/opptintr/pfoa/pfoafacts.pdf) announced that a "telomer" may possibly metabolize or decompose to PFOA. It is also announced that the "telomer" is used in a large number of commercial products including fire fighting foams, care products and cleaning products as well as soil, stain and grease resistant coating on carpets, textiles, paper, and leather.

### DISCLOSURE OF THE INVENTION

### Problems to be Solved by the Invention

An object of the present invention is to provide a water- and oil-repellent agent imparting excellent water- and oil-repellency to paper, even if an fluoroalkyl group has less than 8 carbon atoms.

### Means for Solving the Problems

The present invention provides a treatment agent for paper which comprises:
(A) repeating units derived from (a) a fluorine-containing monomer of the formula:

   CH₂=C(-X)-C(=O)-Y-(CH₂)ₘ-Z-(CH₂)ₙ-Rf (I)

   wherein X is a hydrogen atom, a methyl group, a fluorine atom, a chlorine atom, a bromine atom, a iodine atom, a CFX¹X² group (wherein each of X¹ and X² is a hydrogen atom, a fluorine atom or a chlorine atom), a cyano group, a linear or branched fluoroalkyl group having 1 to 20 carbon atoms, a substituted or unsubstituted benzyl group, or a substituted or unsubstituted phenyl group;
   Y is -0- or -NH-;
   Z is -S-, -SO- or -SO₂-;
   Rf is a fluoroalkyl group having 1 to 6 carbon atoms; and
   m is from 1 to 10 and n is from 0 to 10.
The paper treatment agent of the present invention, generally, is a composition comprising the fluorine-containing polymer and a liquid medium (water and/or an organic solvent).

### EFFECTS OF THE INVENTION

The present invention can give excellent water repellency, water repellency and stain proofing property to paper.

### MODE OF CARRYING OUT THE INVENTION

The fluorine-containing polymer in the present invention comprises (A) repeating units derived from the above-mentioned fluorine-containing monomer (a).
The fluorine-containing polymer in the present invention is a homopolymer or copolymer.
In the case that the fluorine-containing polymer is the copolymer, the fluorine-containing polymer may contain:
(B) repeating units derived from a monomer free from a fluorine atom, and
(C) optionally, repeating units derived from a crosslinkable monomer,
in addition to the repeating unit (A).

In the present invention, the repeating unit (A) is formed by the fluorine-containing monomer (a) of the formula (I).
The fluorine-containing monomer (a) has an ester group or an amide group.

In the formula (I), the Rf group is preferably a perfluoroalkyl group. The carbon number of the Rf group may be from 1 to 6, for example, from 1 to 5, particularly from 1 to 4. Examples of the Rf group include -CF₃,-CF₂CF₃, -CF₂CF₂CF₃, -CF(CF₃)₂, -CF₂CF₂CF₂CF₃, -CF₂CF(CF₃)₂, -C(CF₃)₃, -(CF₂)₄CF₃, -(CF₂)₂CF(CF₃)₂ -CF₂C(CF₃)₃,-CF(CF₃)CF₂CF₂CF₃, -(CF₂)₅CF₃ and -(CF₂)₃CF(CF₃)₂.
m may be, for example, from 2 to 10, and n may be, for example, from 1 to 10.
The followings are mentioned as the fluorine-containing monomer (a):

CH₂=C(-X)-C(=O)-O-(CH₂)ₘ-S-(CH₂)ₙ-Rf

CH₂=C(-X)-C(=O)-O-(CH₂)ₘ-SO-(CH₂)ₙ-Rf

CH₂=C(-X)-C(=O)-O-(CH₂)ₘ-SO₂-(CH₂)ₙ-Rf

CH₂=C(-X)-C(=O)-NH-(CH₂)ₘ-S-(CH₂)ₙ-Rf

CH₂=C(-X)-C(=O)-NH-(CH₂)ₘ-SO-(CH₂)ₙ-Rf

CH₂=C(-X)-C(=O)-NH-(CH₂)ₘ-SO₂-(CH₂)ₙ-Rf

wherein X is a hydrogen atom, a methyl group, a fluorine atom, a chlorine atom, a bromine atom, a iodine atom, a CFX¹X² group (wherein each of X¹ and X² is a hydrogen atom, a fluorine atom or a chlorine atom), a cyano group, a linear or branched fluoroalkyl group having 1 to 20 carbon atoms, a substituted or unsubstituted benzyl group, or a substituted or unsubstituted phenyl group; and
m is from 1 to 10 and n is from 0 to 10.

Examples of the fluorine-containing monomer (a) include the followings:

CH₂=C(-F)-C(=O)-O-(CH₂)₂-S-Rf

CH₂=C(-F)-C(=O)-NH-(CH₂)₂-S-Rf

CH₂=C(-F)-C(=O)-O-(CH₂)₂-S-(CH₂)₂-Rf

CH₂=C(-F)-C(=O)-O=(CH₂)₂-SO-Rf

CH₂=C(-F)-C(=O)-O-(CH₂)₂-SO-(CH₂)₂-Rf

CH₂=C(-F)-C(=O)-NH-(CH₂)₂-SU-(CH₂)₂-Rf

CH₂=C(-F)-C(=O)-O-(CH₂)₂-SO₂-Rf

CH₂=C(-F)-C(=O)-NH-(CH₂)₂-SO₂-Rf

CH₂=C(-F)-C(=O)-O-(CH₂)₂-SO₂-(CH₂)₂-Rf

CH₂=C(-Cl)-C(=O)-O-(CH₂)₂-S-Rf

CH₂=C(-Cl)-C(=O)-O-(CH₂)₂-S-(CH₂)₂-Rf

CH₂=C(-Cl)-C(=O)-NH-(CH₂)₂-S-(CH₂)₂-Rf

CH₂=C(-Cl)-C(=O)-O-(CH₂)₂-SO-Rf

CH₂=C(-Cl)-C(=O)-NH-(CH₂)₂-SO-Rf

CH₂=C(-Cl)-C(=O)-O-(CH₂)₂-SO-(CH₂)₂-Rf

CH₂=C(-Cl)-C(=O)-O-(CH₂)₂-SO₂-Rf

CH₂=C(-Cl)-C(=O)-O-(CH₂)₂-SO₂-(CH₂)₂-Rf

CH₂=C(-CF₃)-C(=O)-O-(CH₂)₂-S-Rf

CH₂=C(-CF₃)-C(=O)-NH-(CH₂)₂-S-Rf

CH₂=C(-CF₃)-C(=O)-O-(CH₂)₂-S-(CH₂)₂-Rf

CH₂=C(-CF₃)-C(=O)-O-(CH₂)₂-SO-Rf

CH₂=C(-CF₃)-C(=O)-NH-(CH₂)₂-SO-Rf

CH₂=C(-CF₃)-C(=O)-O-(CH₂)₂-SO-(CH₂)₂-Rf

CH₂=C(-CF₃)-C(=O)-O-(CH₂)₂-SO₂-Rf

CH₂=C(-CF₃)-C(=O)-O-(CH₂)₂-SO₂-(CH₂)₂-Rf

CH₂=C(-CF₃)-C(=O)-NH-(CH₂)₂-SO₂-(CH₂)₂-Rf

CH₂=C(-CF₂H)-C(=O)-O-(CH₂)₂-S-Rf

CH₂=C(-CF₂H)-C(=O)-NH-(CH₂)₂-S-Rf

CH₂=C(-CF₂H)-C(=O)-O-(CH₂)₂-S-(CH₂)₂-Rf

CH₂=C(-CF₂H)-C(=O)-O-(CH₂)₂-SO-Rf

CH₂=C(-CF₂H)-C(=O)-O-(CH₂)₂-SO-(CH₂)₂-Rf

CH₂=C(-CF₂H)-C(=O)-O-(CH₂)₂-SO₂-Rf

CH₂=C(-CF₂H)-C(=O)-O-(CH₂)₂-SO₂-(CH₂)₂-Rf

CH₂=C(-CF₂H)-C(=O)-NH-(CH₂)₂-SO₂-(CH₂)₂-Rf

CH₂=C(-CN)-C(=O)-O-(CH₂)₂-S-Rf

CH₂=C(-CN)-C(=O)-O-(CH₂)₂-S-(CH₂)₂-Rf

CH₂=C(-CN)-C(=O)-NH-(CH₂)₂-S-(CH₂)₂-Rf

CH₂=C(-CN)-C(=O)-O-(CH₂)₂-SO-Rf

CH₂=C(-CN)-C(=O)-O-(CH₂)₂-SO-(CH₂)₂-Rf

CH₂=C(-CN)-C(=O)-O-(CH₂)₂-SO₂-Rf

CH₂=C(-CN)-C(=O)-NH-(CH₂)₂-SO₂-Rf

CH₂=C(-CN)-C(=O)-O-(CH₂)₂-SO₂-(CH₂)₂-Rf

CH₂=C(-CF₂CF₃)-C(=O)-O-(CH₂)₂-S-Rf

CH₂=C(-CF₂CF₃)-C(=O)-NH-(CH₂)₂-S-Rf

CH₂=C(-CF₂CF₃)-C(=O)-O-(CH₂)₂-S-(CH₂)₂-Rf

CH₂=C(-CF₂CF₃)-C(=O)-O-(CH₂)₂-SO-Rf

CH₂=C(-CF₂CF₃)-C(=O)-O-(CH₂)₂-SO-(CH₂)₂-Rf

CH₂=C(-CF₂CF₃)-C(=O)-NH-(CH₂)₂-SO-(CH₂)₂-Rf

CH₂=C(-CF₂CF₃)-C(=O)-O-(CH₂)₂-SO₂-Rf

CH₂=C(-CF₂CF₃)-C(=O)-O-(CH₂)₂-SO₂-(CH₂)₂-Rf

CH₂=C(-F)-C(=O)-O-(CH₂)₃-S-Rf

CH₂=C(-F)-C(=O)-NH-(CH₂)₃-S-Rf

CH₂=C(-F)-C(=O)-O-(CH₂)₃-S-(CH₂)₂-Rf

CH₂=C(-F)-C(=O)-O-(CH₂)₃-SO-Rf

CH₂=C(-F)-C(=O)-O-(CH₂)₃-SO-(CH₂)₂-Rf

CH₂=C(-F)-C(=O)-O-(CH₂)₃-SO₂-Rf

CH₂=C(-F)-C(=O)-O-(CH₂)₃-SO₂-(CH₂)₂-Rf

CH₂=C(-Cl)-C(=O)-O-(CH₂)₃-S-Rf

CH₂=C(-Cl)-C(=O)-O-(CH₂)₃-S-(CH₂)₂-Rf

CH₂=C(-Cl)-C(=O)-NH-(CH₂)₃-S-(CH₂)₂-Rf

CH₂=C(-Cl)-C(=O)-O-(CH₂)₃-SO-Rf

CH₂=C(-Cl)-C(=O)-O-(CH₂)₃-SO-(CH₂)₂-Rf

CH₂=C(-Cl)-C(=O)-O-(CH₂)₃-SO₂-Rf

CH₂=C(-Cl)-C(=O)-O-(CH₂)₃-SO₂-(CH₂)₂-Rf

CH₂=C(-CF₃)-C(=O)-O-(CH₂)₃-S-Rf

CH₂-C(-CF₃)-C(=O)-O-(CH₂)₃-S-(CH₂)₂-Rf

CH₂=C(-CF₃)-C(=O)-O-(CH₂)₃-SO-Rf

CH₂=C(-CF₃)-C(=O)-O-(CH₂)₃-SO-(CH₂)₂-Rf

CH₂=C(-CF₃)-C(=O)-NH-(CH₂)₃-SO-(CH₂)₂-Rf

CH₂=C(-CF₃)-C(=O)-O-(CH₂)₃-SO₂-Rf

CH₂=C(-CF₃)-C(=O)-O-(CH₂)₃-SO₂-(CH₂)₂-Rf

CH₂=C(-CF₂H)-C(=O)-O-(CH₂)₃-S-Rf

CH₂=C(-CF₂H)-C(=O)-O-(CH₂)₃-S-(CH₂)₂-Rf

CH₂=C(-CF₂H)-C(=O)-NH-(CH₂)₃-S-(CH₂)₂-Rf

CH₂=C(-CF₂H)-C(=O)-O-(CH₂)₃-SO-RF

CH₂=C(-CF₂H)-C(=O)-NH-(CH₂)₃-SO-Rf

CH₂=C(-CF₂H)-C(=O)-O-(CH₂)₃-SO-(CH₂)₂-Rf

CH₂=C(-CF₂H)-C(=O)-O-(CH₂)₃-SO₂-Rf

CH₂=C(-CF₂H)-C(=O)-O-(CH₂)₃-SO₂-(CH₂)₂-Rf

CH₂=C(-CF₂H)-C(=O)-NH-(CH₂)₃-SO₂-(CH₂)₂-Rf

CH₂-C(-CN)-C(=O)-O-(CH₂)₃-S-Rf

CH₂=C(-CN)-C(=O)-O-(CH₂)₃-S-(CH₂)₂-Rf

CH₂=C(-CN)-C(=O)-O-(CH₂)₃-SO-Rf

CH₂=C(-CN)-C(=O)-NH-(CH₂)₃-SO-Rf

CH₂=C(-CN)-C(=O)-O-(CH₂)₃-SO-Rf

CH₂=C(-CN)-C(=O)-O-(CH₂)₃-SO₂-(CH₂)₂-Rf

CH₂=C(-CN)-C(=O)-O-(CH₂)₃-SO₂-(CH₂)₂-Rf

CH₂=C(-CF₂CF₃)-C(=O)-O-(CH₂)₃-S-Rf

CH₂=C(-CF₂CF₃)-C(=O)-NH-(CH₂)₃-S-Rf

CH₂=C(-CF₂CF₃)-C(=O)-O-(CH₂)₃-S-(CH₂)₂-Rf

CH₂=C(-CF₂CF₃)-C(=O)-O-(CH₂)₃-SO-Rf

CH₂=C(-CF₂CF₃)-C(=O)-O-(CH₂)₂-SO-(CH₂)₂-Rf

CH₂=C(-CF₂CF₃)-C(=O)-O-(CH₂)₃-SO₂-Rf

CH₂=C(-CF₂CF₃)-C(=O)-O-(CH₂)₂-SO₂-(CH₂)₂-Rf

wherein Rf is an fluoroalkyl group having 1 to 6 carbon atoms.

The fluorine-containing monomer (a) can be prepared, for example, as follows:

### In case that Y is -O- (oxygen atom)

Mercaptoethanol is reacted with perfluoroalkyl iodide having a Rf group having one end substituted with iodine in a solvent (for example, water/DMF), for example, at 30°C to 90°C for 0.5 hours to 30 hours to give a perfluoroalkyl thioethanol. This alcohol is reacted with dichloropropionic acid in a solvent (for example, cyclohexane) in the presence of a catalyst (for example, paratoluene sulfonic acid), for example, at 30°C to 70°C for 0.5 hours to 30 hours to give dichloropropionate. Then, the dehydrochloride reaction is performed in a solvent (for example, chloroform) in the presence of triethylamine to give perfluoroalkylthioethyl (2-chloro)acrylate.

### In case that Y is -NH-

Into a reactor, tridecylmethyl ammonium chloride, perfluoroalkylethyl iodide having Rf group substituted with iodine at one end, and an aqueous solution of sodium azide are added (for example, at room temperature), and reacted with stirring and heating (for example, at 50 to 95°C, particularly at 90°C) for 1 to 50 hours (for example, 20 hours). After the completion of the reaction, the disappearance of the raw material, that is, the iodine compound is confirmed by GC (gas chromatography). The reaction liquid is cooled to room temperature (23°C), and a lower organic layer is separated. An aqueous layer is extracted with diisopropyl ether, and the extract as such is used in the next reaction.
Into the autoclave, said reaction extract and the catalyst (for example, 10% palladium/carbon) are added and then a hydrogen gas (for example, at the pressure of 2 to 15 Kg/cm², particularly 8 Kg/cm²) is added. The mixture is stirred, for example, at 10 to 30°C (particularly room temperature (23°C)) for 1 to 30 hours (for example, 15 hours). The disappearance of the raw material is confirmed by GC, an organic layer is filtered by celite, and a filtrate as such is used in the following reaction.
Into a flask, triethylamine and 4-t-butyl catechol are added to said solution of amino product in diisopropyl ether under cooling with ice. Then 2,3-dichloropropionic acid chloride is added under cooling with ice, and the mixture is stirred at room temperature (23°C) for 0.5 to 50 hours (for example, 12.5 hours). A produced solid is filtered off, the filtrate is washed with a 5% aqueous solution of citric acid, and the organic layer is dried over magnesium sulfate. The mixture is filtered and the filtrate is concentrated under reduced pressure. A residue is subjected to a silica gel chromatograph to give perfluoroalkylethyl(2-chloro)acrylic acid amide.

The repeating units (B) are derived from (b) the monomer free from a fluorine atom. The monomer (b) is preferably a fluorine-free monomer having a carbon-carbon double bond. The monomer (b) is preferably a vinyl monomer which is free from fluorine. The fluorine atom-free monomer (b) is generally a compound having one carbon-carbon double bond. Preferable examples of the fluorine atom-free monomer (b) include, for example, cthylene, vinyl acetate, vinyl halide (for example, vinyl chloride) vinylidene halide (for example, vinylidene chloride), acrylonitrile, styrene, polyethyleneglycol (meth)acrylate, polypropyleneglycol (meth) acrylate, methoxypolyethyleneglycol (meth)acrylate, methoxypolypropyleneglycol (meth)acrylate, vinyl alkyl ether and isoprene. The fluorine atom-free monomer (b) is not limited to these examples.

The fluorine atom-free monomer (b) may be a (meth)acrylate ester having an alkyl group. The number of carbon atoms of the alkyl group may be from 1 to 30, for example, from 6 to 30, e.g., from 10 to 30. For example, the fluorine atom-free monomer (b) may be acrylates of the general formula:

CH₂=CA¹COOA²

wherein A¹ is a hydrogen atom or a methyl group, and
A² is an alkyl group represented by CₙH₂ₙ₊₁ (n = 1 to 30).

The repeating units (C) are derived from the crosslinkable monomer (c). The crosslinkable monomer (c) may be a fluorine-free monomer having at least two reactive groups and/or carbon-carbon double bonds. The crosslinkable monomer (c) may be a compound having at least two carbon-carbon double bonds, or a compound having at least one carbon-carbon double bond and at least one reactive group. Examples of the reactive group include a hydroxyl group, an epoxy group, a chloromethyl group, a blocked isocyanate group, an amino group and a carboxyl group.

Examples of the crosslinkable monomer (c) include diacetoneacrylamide, (meth)acrylamide, N-methylolacrylamide, hydroxymethyl (meth)acrylate, hydroxyethyl (meth)acrylate, 3-chloro-2-hydroxypropyl (meth)acrylate, N,N-dimethylaminoethyl (meth)acrylate, N,N-diethylaminoethyl (meth)acrylate, butadiene, chloroprene and glycidyl (meth)acrylate, to which the crosslinkable monomer is not limited.

The copolymerization with the monomer (b) and/or the monomer (c) can optionally improve various properties such as water- and oil-repellency and soil resistance; cleaning durability and washing durability of said repellency and resistance; solubility in solvent; hardness; and feeling.

In the fluorine-containing polymer,
the amount of the fluorine atom-free monomer (b) may be, from 0 to 500 parts by weight, for example, from 0.1 to 100 parts by weight, particularly from 0.1 to 50 parts by weight, and
the amount of the crosslinkable monomer (c) may be from 0 to 50 parts by weight, for example, from 0 to 20 parts by weight, particularly, from 0.1 to 15 parts by weight, based on 100 parts by weight of the fluorine-containing monomer (a).

The fluorine-containing polymer can be produced as follows.
In a solution polymerization, there can be used a method of dissolving the monomer(s) into an organic solvent in the presence of a polymerization initiator, replacing the atmosphere by nitrogen, and stirring the mixture with heating at the temperature within the range from 30°C to 120°C for 1 hour to 10 hours. Examples of the polymerization initiator include azobisisobutyronitrile, benzoyl peroxide, di-tert-butyl peroxide, lauryl peroxide, cumene hydroperoxide, t-butyl peroxypivalate and diisopropyl peroxydicarbonate. The polymerization initiator may be used in the amount within the range from 0.01 to 20 parts by weight, for example, from 0.01 to 10 parts by weight, based on 100 parts by weight of total of the monomers.

The organic solvent is inert to the monomer(s) and dissolves the monomer(s), and examples thereof include acetone, chloroform, HCHC225, isopropyl alcohol, pentane, hexane, heptane, octane, cyclohexane, benzene, toluene, xylene, petroleum ether, tetrahydrofuran, 1,4-dioxane, methyl ethyl ketone, methyl isobutyl ketone, ethyl acetate, butyl acetate, 1,1,2,2-tetrachloroethane, 1,1,1-trichloroethane, trichloroethylene, perchloroethylene, tetrachlorodifluoroethane and trichlorotrifluoroethane. The organic solvent may be used in the amount within the range from 50 to 2,000 parts by weight, for example, from 50 to 1,000 parts by weight, based on 100 parts by weight of total of the monomers.

In an emulsion polymerization, there can be used a method of emulsifying monomers in water in the presence of a polymerization initiator and an emulsifying agent, replacing the atmosphere by nitrogen, and polymerizing with stirring, for example, at the temperature within the range from 50°C to 80°C for 1 hour to 10 hours. As the polymerization initiator, for example, water-soluble initiators (e.g., benzoyl peroxide, lauroyl peroxide, t-butyl perbenzoate, 1-hydroxycyclohexyl hydroperoxide, 3-carboxypropionyl peroxide, acetyl peroxide, azobisisobutylamidine dihydrochloride, azobisisobutyronitrile, sodium peroxide, potassium persulfate and ammonium persulfate) and oil-soluble initiators (e.g., azobisisobutyronitrile, benzoyl peroxide, di-tert-butyl peroxide, lauryl peroxide, cumene hydroperoxide, t-butyl peroxypivalate and diisopropyl peroxydicarbonate) are used. The polymerization initiator may be used in the amount within the range from 0.01 to 10 parts by weight based on 100 parts by weight of the monomers.

In order to obtain a polymer dispersion in water, which is superior in storage stability, it is desirable that the monomers are finely dispersed in water by using an emulsifying device capable of applying a strong shearing energy (e.g., a high-pressure homogenizer and an ultrasonic homogenizer) and then polymerized with using the oil-soluble polymerization initiator. As the emulsifying agent, various emulsifying agents such as an anionic emulsifying agent, a cationic emulsifying agent and a nonionic emulsifying agent can be used in the amount within the range from 0.5 to 20 parts by weight based on 100 parts by weight of the monomers. An anionic and/or cationic and/or nonionic emulsifying agent is preferably used. When the monomers are not completely compatibilized, a compatibilizing agent (e.g., a water-soluble organic solvent and a low-molecular weight monomer) capable of sufficiently compatibilizing them is preferably added to these monomers. By the addition of the compatibilizing agent, the emulsifiability and polymerizability can be improved.

Examples of the water-soluble organic solvent include acetone, methyl ethyl ketone, ethyl acetate, propylene glycol, dipropylene glycol monomethyl ether, dipropylene glycol, tripropylene glycol and ethanol. The water-soluble organic solvent may be used in the amount within the range from 1 to 50 parts by weight, e.g., from 10 to 40 parts by weight, based on 100 parts by weight of water. Examples of the low-molecular weight monomer include methyl methacrylate, glycidyl methacrylate and 2,2,2-trifluoroethyl methacrylate. The low-molecular weight monomer may be used in the amount within the range from 1 to 50 parts by weight, e.g., from 10 to 40 parts by weight, based on 100 parts by weight of total of monomers.

The surface treatment agent of the present invention is preferably in the form of a solution, an emulsion or an aerosol. The surface treatment agent generally comprises the fluorine-containing polymer and a medium (particularly an organic solvent and/or water, for example, a liquid medium). The concentration of the fluorine-containing polymer in the surface treatment agent may be, for example, from 0.1 to 50 % by weight.

The treatment agent of the present invention can be used for treating (for example, surface-treating) paper.
The treatment agent of the present invention can be applied to a substrate to be treated by a known method. Usually, the treatment agent is diluted or dispersed with an organic solvent or water, is adhered to surfaces of the substrate by a well-known procedure such as an immersion coating, a spray coating and a foam coating, and is dried (a surface treatment). Alternatively, when paper is manufactured, the treatment agent may be added to the pulp (an internal addition treatment). The fluorine-containing polymer may have the weight ratio of fluorine atom based on the paper, of 0.01 to 0.5% by weight, for example, 0.05 to 0.2% by weight in the case of the surface treatment, and may have the weight ratio of fluorine atom based on pulp, of 0.05 to 0.5% by weight, for example, 0.2 to 0.4% by weight in the case of the internal addition treatment.

The paper can be manufactured by conventional paper manufacturing methods. There can be used an internal addition method wherein the treatment agent is added to pulp slurry before manufacturing the paper, and an external addition method wherein the treatment agent is added to a manufactured paper can be used. Arbitrarily, the use of a heat treatment capable of having the temperature of at most 200°C depending on the properties of the substrate can exhibit excellent lipophobicity and hydrophobicity.

The present invention can be used for base paper for gypsum board, coating base paper, medium grade paper, ordinary liner and core, pure white neutral roll paper, neutral liner, rust-preventive liner, metal composite paper and kraft paper. The present invention can be used also for neutral printing or writing paper, neutral coating base paper, neutral PPC paper, neutral thermosensible paper, neutral pressure-sensitive paper, neutral ink jet paper, and neutral communication paper. Further, molded paper shaped by using a mold, particularly a molded container is included. A pulp-molded container can be made by the method described in, for example, JP-A-9-183429.

As a pulp raw material, there may be used any of bleached pulp or non-bleached chemical pulp such as kraft pulp or sulfite pulp, bleached or non-bleached high yield pulp such as chip pulp, mechanical pulp or thermomechanical pulp, and waste paper pulp of news paper, journals, corrugated board and ink-removed paper. Also, a mixture of the above pulp raw material with synthetic fibers such as asbestos, polyamide, polyimide, polyester, polyolefin or polyvinyl alcohol may be used.

The water resistance of paper can be improved by adding a sizing agent to the paper. Examples of the sizing agent are a cationic sizing agent, anionic sizing agent, and rosin-based sizing agent (e.g., acidic rosin-based sizing agent, or neutral rosin-based sizing agent). A styrene-acrylic acid copolymer and an alkylketene dimer are preferred. The amount of the sizing agent may be 0.01 to 5 % by weight based on the weight of the pulp.

If needed, the paper may contain additives conventionally used in papermaking, for example, a paper strength-enhancing agent such as starch, modified starch, carboxyl methyl cellulose or polyamide-polyamine-epichlorohydrin resin, a yield-improving agent, a dye, a fluorescent dyc, a slime-controlling agent, and a defoaming agent.
If needed, a size press, gate roll coater, bill blade coater, calender or the like may be used to apply the chemicals (e.g., starch, polyvinyl alcohol, dye, coating color, or slide-preventive agent) to paper.

### EXAMPLES

Hereinafter, the present invention will be described in more detail by way of Examples. The following Examples are specifically illustrated but are not to be construed to limit the scope of the invention. Throughout Examples, "parts" and "%" are "parts by weight" and "% by weight", unless otherwise specified.

The testing methods used are as follows.

### Oil resistance

The oil resistance of paper is measured according to a procedure extending TAPPI UM-557. One drop of each of test oils indicated in Table 1 is placed on paper, and the penetration state of the oil into the paper is observed 15 seconds later. The maximum of the oil resistance degrees of a test oil which does not penetrate paper is taken as oil resistance.

**Table 1**

| Oil resistance degree | Castor oil | Toluene | Heptane |
|---|---|---|---|
| 1 | 100 | 0 | 0 |
| 2 | 90 | 5 | 5 |
| 3 | 80 | 10 | 10 |
| 4 | 70 | 15 | 15 |
| 5 | 60 | 20 | 20 |
| 6 | 50 | 25 | 25 |
| 7 | 40 | 30 | 30 |
| 8 | 30 | 35 | 35 |
| 9 | 20 | 40 | 40 |
| 10 | 10 | 45 | 45 |
| 11 | 0 | 50 | 50 |
| 12 | 0 | 45 | 55 |
| 13 | 0 | 35 | 65 |
| 14 | 0 | 25 | 75 |
| 15 | 0 | 15 | 85 |
| 16 | 0 | 0 | 100 |

### Synthesis Example 1 (9FSO2PA monomer)

Synthesis of 3-(perfluorobutylsulfonyl)propyl acrylate 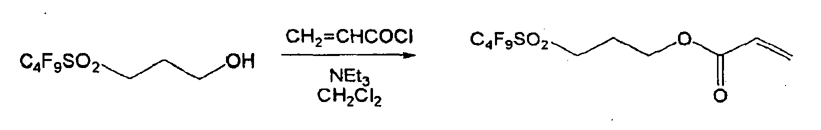 A solution of 3-(perfluorobutylsulfonyl)propanol (54.4 g, 159 mmol), triethylamine (33 ml, 238 mmol), 4-t-butylcatechol (0.14 g) and dichloromethane (520 ml) was cooled to 0°C in an equipment having a calcium chloride tube, and then acryloyl chloride (15.5 ml, 191 mmol) was slowly added dropwise over 40 minutes. After stirring at room temperature for one hour and washing the mixture with a 15% aqueous citric acid solution (600 ml) and a saturated saline solution, the mixture was dried over anhydrous magnesium sulfate, filtered and then concentrated under reduced pressure to give a crude acrylate ester. The residue was purified by silica gel column chromatography (n-hexane:ethyl acetate = 6:1) and the concentrated transparent liquid was vacuum-dried after concentration to obtain 60.0 g of 3-(perfluorobutylsulfonyl)propyl acrylate. Yield was 95.3%.
¹H NMR (CDCl₃; internal standard TMS δ ppm): 6.45 (dd, 1H, J_{AB}=1.1 Hz, J_{AX}=17.3 Hz, CH_{A}H_{B}=C), 6.12 (dd, 1H, J_{AX}=17.3 Hz, J_{BX}=10.5 Hz, C=CH_{X}), 5.95 (dd, 1H, J_{BX}=10.5 Hz, J_{AB}=1.1 Hz, CH_{A}H_{B}=C), 4.34 (t, 2H, J_{HH}=6.0 Hz, OCH₂), 3.41 (t, 2H, J_{HH}=7.8 Hz, CH₂SO₂), 2.36 (tt, 2H, J_{HH}=7.8 Hz, J_{HH}=6.0 Hz, CH₂CH₂CH₂).
¹⁹F NMR (CDCl₃; internal standard CFCl₃ δ ppm): -81.2 (m, 3F, CF₃), -113.8 (m, 2F, CF₂SO₂), -121.8 (m, 2F, CF₂),-126.3 (m, 2F, CF₂).

### Polymers were prepared as follows:

### Preparative Example 1

### Preparation of a 9FSO2PA homopolymer (Homopolymer A)

9FSO2PA (10 g) obtained in the Synthetic Example 1 as a monomer, stearyl trimethylammonium chloride (0.25 g), polyoxyethylene polyoxypropylene isotridecyl ether (0.14 g), polyoxyethylene sorbitan monolaurate (0.55 g) as emulsifiers, lauryl mercaptan (0.2 g) as a chain transfer agent, tripropylene glycol (2.4 g), pure water (36 g), and acetic acid (0.04 g) were charged and emulsified with a high-pressure homogenizer.
The resultant emulsion was charged into a 4-necked flask equipped with a reflux condenser, a nitrogen introduction tube, a thermometer and a stirring device. The emulsion was kept at 60°C for about 1 hour under the nitrogen gas stream, 0.1 g of an initiator [2,2'-azobis(2-aminodipropane) dihydrochloride] dissolved in 1 g of water was added to initiate the polymerization, and the mixture was heated with stirring at 60°C for 4 hours.
The solid content of the resultant emulsion containing the polymer (9FSO2PA homopolymer) was 23.5%.

### Preparative Example 2

### Preparation of a 9FSO2PA/StMA copolymer (Copolymer A)

The same procedure as in Preparative Example 1 was repeated except that 9FSO2PA (9.0 g) obtained in Synthetic Example 1 and stearyl methacrylate (StMA) (1.0 g) were charged as a monomer. The solid content of the resultant emulsion of polymer (9FSO2PA/StMA copolymer) was 22.9%. The composition of the polymer was almost the same as the formulations of charged monomers.

### Comparative Preparative Example 1

### Preparation of a 9FA/StMA copolymer (copolymer B)

The same procedure as in Preparative Example 1 was repeated except that 2-(perfluorobutyl)ethyl acrylate (9FA) (9.0 g) and stearyl methacrylate (StMA) (1.0 g) were charged as a monomer. The solid content of the resultant emulsion of polymer (9FA/StMA copolymer) was 23.0%. The composition of the polymer was almost the same as the formulations of charged monomers.

### Comparative Preparative Example 2

### Preparation of a 9FA homopolymer (homopolymer B)

The same procedure as in Preparative Example 1 was repeated except that 2-(perfluorobutyl)ethyl acrylate (9FA) (R-1420 available from Daikin Chemical Sales Co., Ltd.) (10.0 g) was charged as a monomer. The solid concentration of the resultant emulsion of polymer (9FA homopolymer) was 23.1%.

### Comparative Preparative Example 3

### Preparation of a FA/StMA copolymer (copolymer C)

The same procedure as in Preparative Example 1 was repeated except that CₙF₂ₙ₊₁CH₂CH₂OCOCH=CH₂ (a mixture of compounds wherein n is 6, 8, 10, 12 and 14 (the average of n is 8)) (FA) (a fluorine-containing monomer) and stearyl methacrylate (StMA) (1.0 g) were charged as a monomer. The solid content of the resultant emulsion of polymer (FA/StMA copolymer) was 23.3%. The composition of the polymer was almost the same as the formulations of charged monomers.

Base paper for the coating of the polymer solution was prepared by the following procedure.
A aqueous solution (0.88 g) of polyamideamine-epichlorohydrin having a solid content of 1% was added under stirring to a 1.75 wt% aqueous dispersion (250 g) of a mixture of a bleached kraft pulp of broad-leaved trees (90 parts by weight) and a bleached kraft pulp of needle-leaved trees (10 parts by weight) which was beaten to a freeness of 500cc (Canadian freeness). Then, the stirring was continued for 2 minutes.
The resultant pulp slurry was made into paper with a standard hand papermaking machine described in JIS P8209 (The hand papermaking machine was modified to give a paper having a size of 25 cm x 25 cm).
The resultant wet paper was pressed between filter paper sheets under a pressure of 3.5 kg/cm² so as to sufficiently absorb water contained in the paper. The paper was dried over a drum drier (115°C x 70 seconds) to obtain base paper having a basis weight of 70 g/cm².

An aqueous solution of starch was prepared as follows.
After adding starch (10 g) to water (90 g), the mixture was heated up to about 80 to 90°C and kept at this temperature for about 30 minutes. The mixture was cooled to give a 10% aqueous solution of starch.

### Examples 1 to 2 and Comparative Examples 1 to 4

### External addition, without auxiliary agent (starch)

Each of water-resistant and oil-resistant emulsion (that is, an emulsion of polymer) was diluted to a desired solid content with water.
A fluorine-containing phosphate ester was a compound of the formula:

[C_{B}H₁₇-CH₂CH₂-O]ₙP(=O) [O⁻ NH₂(CH₂CH₂OH)₂⁺]₃₋ₙ

(a mixture wherein n is 1 to 3 with a main value of 2.)
After the base paper was immersed in the diluted liquid, the base paper was squeezed at a squeeze pressure of 0.1 kg/cm with a squeezing machine, and heated at 115°C for 70 seconds with a drum-type dryer. The oil resistance of this water-resistant paper was evaluated. The result is shown in Table 2.

**Table 2 Without auxiliary agent (starch)**

| | | | Water-resistant and oil-resistant agent (% solid in bath) | |
|---|---|---|---|---|
| | | | 0.20 % | 0.30 % |
| Example 1 | Homopolymer A | (9FS02PA homopolymer) | 14 | 16 |
| Example 2 | Copolymer A | (9FS02 PA/StMA copolymer) | 12 | 13 |
| Com. Ex. 1 | Copolymer B | (9 FA/StMA copolymer) | 8 | 9 |
| Com. Ex. 2 | Homopolymer B | (9FA homopolymer) | 8 | 8 |
| Com. Ex. 3 | Copolymer C | (FA/StMA copolymer) | 12 | 15 |
| Com. Ex. 4 | Fluorine-containing phosphate ester | | 15 | 16 |

### Examples 3 to 6 and Comparative Examples 5 to 12

### External addition, with auxiliary agent

Each of water-resistant and oil-resistant emulsion and a starch (2-hydoroxyethyl starch ether) (PENFORD R Gum 290 manufactured by Penford Corporation) were diluted with water to have a desired water-resistant and oil-resistant solid content and a starch solid content of 2% or 5%.
After the base paper was immersed in the diluted liquid, the base paper was squeezed at a squeeze pressure of 0.1 kg/cm with a squeezing machine, and heated at 115°C for 70 seconds with a drum-type dryer.
The oil resistance of this water-resistant paper was evaluated. The result is shown in Table 3 (starch: 2%) and Table 4 (starch: 5%).

**Table 3 With auxiliary agent (starch 2%)**

| | | | Water-resistant and oil-resistant agent (% solid in bath) | |
|---|---|---|---|---|
| | | | 0.20% | 0.30% |
| Example 3 | Homopolymer A | (9FS02PA homopolymer) | 14 | 16 |
| Example 4 | Copolymer A | (9FSO2PA/StMA copolymer) | 12 | 13 |
| Com. Ex. 5 | Copolymer B | (9 FA/StMA copolymer) | 8 | 10 |
| Com. Ex. 6 | Homopolymer B | (9FA homopolymer) | 9 | 10 |
| Com. Ex. 7 | Copolymer C | (FA/StMA copolymer) | 11 | 14 |
| Com. Ex. 8 | Fluorine-containing phosphate ester | | 14 | 16 |

**Table 4 With auxiliary agent (starch 5%)**

| | | | Water-resistant and oil-resistant agent (% solid in bath) | |
|---|---|---|---|---|
| | | | 0.20% | 0.30% |
| Example 5 | Homopolymer A | (9FS02PA homopolymer) | 14 | 16 |
| Example 6 | Copolymer A | (9FSO2 PA/StMA copolymer) | 11 | 13 |
| Com. Ex. 9 | Copolymer B | (9 FA/StMA copolymer) | 9 | 10 |
| Com. Ex. 10 | Homopolymer B | (9FA homopolymer) | 9 | 10 |
| Com. Ex. 11 | Copolymer C | (FA/StMA copolymer) | 12 | 15 |
| Com. Ex. 12 | Fluorine-containing phosphate ester | | 13 | 16 |

### Examples 7-8 and Comparative Examples 13-16

### Internal addition

A aqueous solution (0.88 g) of polyamideamine-epichlorohydrin (WS-552 manufactured by Japan PMC Co., Ltd., a fixing agent (a cationic polymer)) (0.2 % based on pulp, in terms of solid) having a solid content of 1% was added under stirring to a 1.5 wt% aqueous dispersion (290 g) of a mixture of a bleached kraft pulp of broad-leaved trees (90 parts by weight) and a bleached kraft pulp of needle-leaved trees (10 parts by weight) which was beaten to a freeness of 500 cc (Canadian freeness). After the stirring was continued for 1 minute, the water-resistant and oil-resistant emulsion (4.38 g) having a solid content of 1% was added under stirring. The stirring was continued for 1 minute.
The resultant pulp slurry was made into paper with a standard hand papermaking machine described in JIS P8209 (The hand papermaking machine was modified to give a paper having a size of 25 cm x 25 cm).
The resultant wet paper was pressed between filter paper sheets under a pressure of 3.5 kg/cm² so as to sufficiently absorb water contained in the paper. The paper was dried over a drum drier (115°C x 70 seconds) to obtain oil-resistant paper.
The weight basis of the resultant paper was 70 g/m². The oil resistance of this oil-resistant paper was evaluated. The result is shown in Table 5.

**Table 5**

| | | | Water-resistant and oil-resistant agent (solid content wt% based on pulp) | |
|---|---|---|---|---|
| | | | 0.5% | 1.0% |
| Example 7 | Homopolymer A | (9FS02PA homopolymer) | 14 | 16 |
| Example 8 | Copolymer A | (9FS02PA/StMA copolymer) | 10 | 13 |
| Com. Ex. 13 | Copolymer B | (9FA/StMA copolymer) | 8 | 10 |
| Com. Ex. 14 | Homopolymer B | (9FA homopolymer) | 9 | 10 |
| Com. Ex. 15 | Copolymer C | (FA/StMA copolymer) | 12 | 14 |
| Com. Ex. 16 | Fluorine-containing phosphate ester | | 14 | 16 |

## Claims

1. A treatment agent for paper which comprises:
(A) repeating units derived from (a) a fluorine-containing monomer of the formula:
CH₂=C(-X)-C(=O)-Y-(CH₂)ₘ-Z-(CH₂)ₙ-Rf (I)
wherein X is a hydrogen atom, a methyl group, a fluorine atom, a chlorine atom, a bromine atom, a iodine atom, a CFX¹X² group (wherein each of X¹ and X² is a hydrogen atom, a fluorine atom or a chlorine atom), a cyano group, a linear or branched fluoroalkyl group having 1 to 20 carbon atoms, a substituted or unsubstituted benzyl group, or a substituted or unsubstituted phenyl group;
Y is -O- or -NH-;
Z is -S-, -SO- or -SO₂-;
Rf is a fluoroalkyl group having 1 to 6 carbon atoms; and
m is from 1 to 10 and n is from 0 to 10.

2. The treatment agent for paper according to claim 1, further comprising:
(B) repeating units derived from (b) a monomer free from a fluorine atom, and
(C) optionally, repeating units derived from (c) a crosslinkable monomer,
in addition to the repeating units (A).

3. The treatment agent for paper according to claim 1, wherein, in the repeating units (A), the fluoroalkyl group (Rf group) is a perfluoroalkyl group having 1 to 4 carbon atoms.

4. The treatment agent for paper according to claim 2, wherein the fluorine atom-free monomer (b) forming the repeating units (B) is acrylates of the general formula:
CH₂=CA¹COOA²
wherein A¹ is a hydrogen atom or a methyl group, and
A² is a hydrocarbon group having 1 to 30 carbon atoms.

5. The treatment agent for paper according to claim 2, wherein the crosslinkable monomer (c) forming the repeating units (C) is a fluorine-free monomer having at least two reactive groups and/or carbon-carbon double bonds.

6. The treatment agent for paper according to claim 2 wherein, in the fluorine-containing polymer, the amount of the fluorine atom-free monomer (b) is 0.1 to 100 parts by weight, and
the amount of the crosslinkable monomer (c) is at most 50 parts by weight,
based on 100 parts by weight of the fluorine-containing monomer (a).

7. The treatment agent for paper according to claim 1, which further comprises water and/or an organic solvent, in addition to the fluorine-containing polymer.

8. The treatment agent for paper according to claim 1, which is in the form of a solution, an emulsion or an aerosol.

9. A method of treating paper with the treatment agent for paper according to claim 1.

10. A paper treated with the treatment agent for paper according to claim 1.
